(19) **Europäisches Patentamt European Patent Office Office européen des brevets**

(11) **EP 3 714 528 B1**

(12) **EUROPEAN PATENT SPECIFICATION**

(45) Date of publication and mention of the grant of the patent:
**19.06.2024 Bulletin 2024/25**

(21) Application number: **17933144.2**

(22) Date of filing: **21.11.2017**

(51) International Patent Classification (IPC):
*H02K 7/02* (2006.01)   *H02K 7/04* (2006.01)
*H02K 7/09* (2006.01)   *F16C 32/04* (2006.01)
*F16F 15/315* (2006.01)   *H02J 3/30* (2006.01)

(52) Cooperative Patent Classification (CPC):
**H02J 3/30; F16C 32/0442; F16C 32/0461; F16C 32/0463; F16C 32/048; H02K 7/09;** H02K 7/025; Y02E 60/16; Y02P 80/30

(86) International application number:
**PCT/FI2017/050802**

(87) International publication number:
**WO 2019/102059 (31.05.2019 Gazette 2019/22)**

(54) **APPARATUS AND METHOD FOR MODULAR STABILIZATION OF HUBLESS ROTORS**

VORRICHTUNG UND VERFAHREN ZUR MODULAREN STABILISIERUNG VON NABENLOSEN ROTOREN

APPAREIL ET PROCÉDÉ DE STABILISATION MODULAIRE DE ROTORS SANS MOYEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.09.2020 Bulletin 2020/40**

(73) Proprietor: **Teraloop OY**
**02130 Espoo (FI)**

(72) Inventors:
• **DENTON, Ian**
**00220 Helsinki (FI)**
• **TANWEER KAZMI, Syed Husnain**
**02150 Espoo (FI)**
• **ULLAH KHAN, Saif**
**02150 Espoo (FI)**
• **MERILÄ, Markus Olavi Johannes**
**00210 Helsinki (FI)**
• **PÖLLÄNEN, Juuso Oskari**
**00550 Helsinki (FI)**
• **NYBERG, Timo**
**02130 Espoo (FI)**

(74) Representative: **Papula Oy**
**P.O. Box 981**
**00101 Helsinki (FI)**

(56) References cited:
WO-A1-97/07341       US-A- 4 077 678
US-A- 6 130 494       US-A1- 2003 192 449
US-A1- 2003 192 449     US-A1- 2003 217 668
US-B1- 9 787 156       US-B1- 9 787 156

• FILATOV, A. et al.: "Homopolar Permanent-Magnet-Biased Actuators and Their Application in Rotational Active Magnetic Bearing Systems", In: Actuators. Basel, vol. 5, no. 4 16 December 2016 (2016-12-16), pages 1-10, XP55614377, Switzerland : MDPI AG ISSN: 2076-0825 Retrieved from the Internet: URL:http://www.mdpi.com/2076-0825/5/4/26/htm [retrieved on 2018-03-07]

## Description

Apparatus and method for modular stabilization of hubless rotors.

## Technical Field

The invention pertains to rotor stabilization in motors and generators. Specifically the active magnetic stabilization of rotors in motors and generators where the rotor has no central shaft or hub.

## Background

In motors and generators, magnetic bearings may be utilized in order to support, levitate or stabilize the rotor inside the stator by exerting magnetic force on the rotor. The magnetic force may be generated with magnetic bearings involving permanent magnets, electromagnets, or combinations thereof. Magnetic bearings involving electromagnets may be referred to as active magnetic bearings (AMBs). Conventional in-plane (radial) stabilization of the rotor by AMBs is typically achieved with multiple electromagnets magnetically connected by a common core surrounding the rotor. The electromagnets may then be utilized in a four quadrant xy plane so to control the radial position of rotor.

US 2003/0192449 A1 discloses an energy storage ring with a stationary core. WO 97/07341 A1 discloses a radial active magnetic bearing device and process for operating it. US 9787156 B1 discloses a system for storing electrical energy including a ring for storing kinetic energy of rotation, an assembly control system, and at least two motors/generators.

## Summary of Invention

The objective of this invention is to overcome the shortcomings of traditional active magnetic stabilization apparatuses when scaling up the size and speed of motor and generator, particularly in rotating kinetic energy storage devices.

According to the invention defined in the independent claim 1, this is achieved with an electromagnetic actuator apparatus for rotors in motors and generators comprising: an actuator target mounted on a hubless ring shaped rotor having a rotational axis, and; a multitude of modular radially opposed groups of electromagnetic bearing assemblies not connected by a common core and acting in groups of radially opposed groups for the stabilization of the corresponding arc sections of the rotor for radial support of the rotor, the assemblies thereof being distributed along the circumference of the rotor at fixed distances from each other, the assemblies thereof further being both oriented toward the actuator target mounted on the rotor, and separated from the rotor by radial gaps, the electromagnetic bearing assemblies thereof comprising: a multitude of spaced radial electromagnetic poles facing the rotor and configured to induce electromagnetic flux with the actuator target mounted on the rotor, and; a bias winding coil wound around each electromagnetic poles of a single electromagnetic bearing assembly and connecting each electromagnetic bearing assemblies together, and; a control winding coil wound around each electromagnetic poles of a single electromagnetic bearing assembly, the winding being in the opposite direction of its radially opposed electromagnetic bearing assembly.

In some examples of the aforementioned electromagnetic actuator apparatus for rotors in motors and generators, the electromagnetic bearing assemblies further comprise a linear movement apparatus being moveable individually in either a radial direction, an axial direction or in any other possible direction.

The invention defined in the independent claim 3 is a method of electromagnetic radial support of rotors in motors and generators. A multitude of modular electromagnetic bearing assemblies not connected by a common core and acting in groups of radially opposed groups for the stabilization of the corresponding arc sections of the rotor are actuated through a linear movement apparatus being moveable individually. This may be in either a radial direction, an axial direction or in any other possible direction. The rotor is a hubless ring shaped rotor having a rotational axis and the assemblies are distributed along the circumference of the rotor at fixed distances from each other and are both oriented toward the actuator target mounted on the rotor and separated from the rotor by radial gaps. Each of the electromagnetic bearing assemblies thereof comprises a multitude of spaced radial electromagnetic poles facing the rotor and configured to induce electromagnetic flux with an actuator target mounted on the rotor, a bias winding coil wound around each of the electromagnetic poles of a single electromagnetic bearing assembly and connecting each of the electromagnetic bearing assemblies together, and a control winding coil wound around each of electromagnetic poles of a single electromagnetic bearing assembly, the winding being in the opposite direction of its radially opposed electromagnetic bearing assembly. Further embodiments of the invention are defined in the dependent claims 2 and 4 - 6.

## Brief Description of Drawings

Turning to the drawings wherein like reference characters designate identical or corresponding parts:

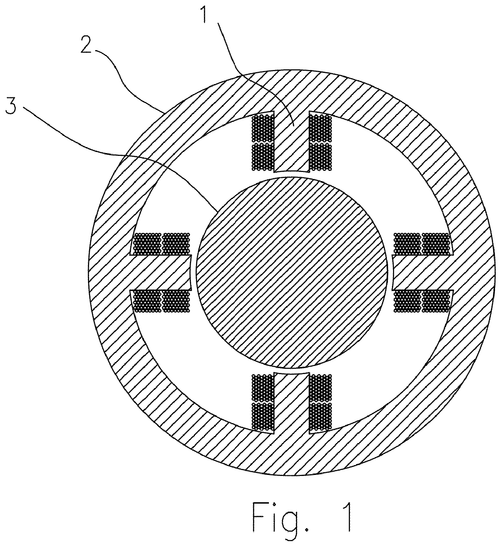

[Fig. 1] Illustrates a plan view of the general apparatus arrangement of a typical active magnetic bearing apparatus. In this figure, the active magnetic bearing cores (1) are connected by a yoke (2) so to form a continuous structure. Further, the actuator cores (1) are oriented inwards towards the actuator target on the rotor (3).

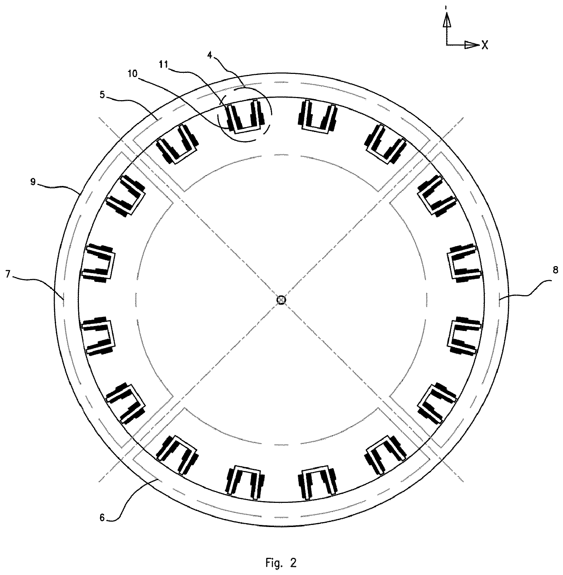

[Fig.2] Illustrates a plan view of an example embodiment of the electromagnetic actuator apparatus disclosed in claims 1 and 2. Without limiting the scope of this invention, the example configuration of this figure illustrates the apparatus consisting electromagnetic bearing actuator assemblies (4) which for the single force axis in the Y-direction are divided into two radially opposing groups (5) and (6), of four active electromagnetic bearing assemblies each. Those modular active electromagnetic bearing assemblies could then operate in radially opposed groups where an addition in the electromagnetic force on one group results in the deduction of the same force from its opposing counterpart. The force axis in the X-direction consists of actuator groups (7) and (8). For this exemplary configuration, the total number of electromagnets for stabilization in the XY plane would be sixteen. Without limiting the scope of this invention, for the purpose of this example, the active magnetic bearing apparatus is implemented in heteropolar configuration. In this figure, the actuator target is mounted on the ring shaped rotor (9). The multitude of modular radially opposed groups of electromagnetic actuator assemblies do not form a common core, the cores are instead segmented. Those radially opposed groups act in groups for the stabilization of the corresponding arc sections of the rotor for radial support of the rotor. The electromagnetic bearing assemblies are distributed along the circumference of the rotor at fixed distances from each other, they are further both oriented towards the actuator target mounted on the rotor, and separated from the rotor by radial gaps. Each electromagnetic bearing assemblies comprise a multitude of spaced radial electromagnetic poles facing the rotor and configured to induce electromagnetic flux with the actuator target mounted on the rotor, and; a bias winding coil (10) both wound around each electromagnetic poles of a single electromagnetic bearing assembly and connecting each electromagnetic bearing assemblies together, and; a control winding coil (11) wound around each electromagnetic poles of a single electromagnetic bearing assembly, the winding being in the opposite direction of its radially opposed electromagnetic bearing assembly. Note that although this is not exemplified in the drawing, the modular electromagnetic bearing assemblies can be alternatively situated inside, outside, above or below the rotor or in any combination of the aforementioned configurations, so long as they are facing the rotor.

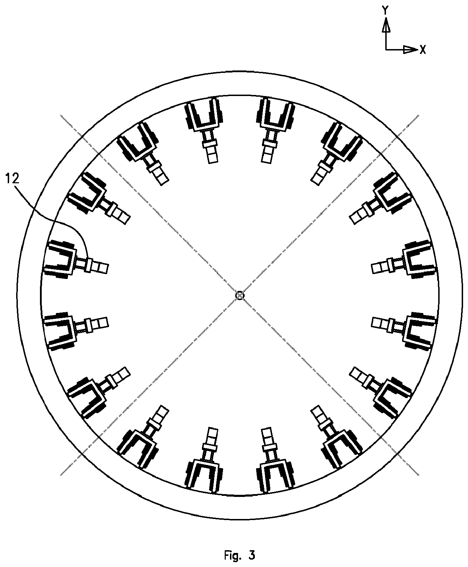

[Fig.3] Illustrates a plan view of an example embodiment of the electromagnetic actuator apparatus disclosed in claims 3 and 4. In this figure, the same electromagnetic bearing assemblies described in figure 2 further comprise a linear movement apparatus (12) being moveable individually in either a radial direction, an axial direction or in any other possible direction.

## Description of Embodiments

The following description is not intended to limit the scope or applicability of the invention in any way. Rather, the following description is intended to provide convenient illustrations for implementing various embodiments of the invention. As will become apparent, various changes can be made in these embodiments within the scope of the claims.

It is disclosed in this patent a novel active magnetic bearing apparatus and method for the position control of ring shaped rotors in motors and generators.

For the purpose of this invention, the stabilization apparatus is implemented as a multitude of modular radially opposed groups of electromagnetic bearing assemblies (4), which are not connected by a common core. Those active magnetic bearing assemblies (4) act in groups of radially opposed groups for the stabilization of the corresponding arc sections of the rotor for radial support of the rotor (9). Those active magnetic bearing assemblies (4) are distributed along the circumference of the rotor (9) at fixed distances from each other, while being both oriented toward the actuator target mounted on the rotor (9), and separated from the rotor (9) by radial gaps.

For the purpose of this invention, "active magnetic bearing assembly" are understood to comprise first a multitude of spaced radial electromagnetic poles facing the rotor and configured to induce electromagnetic flux with the actuator target mounted on the rotor (9), and secondly a bias winding coil (10) both wound around each electromagnetic pole of a single electromagnetic bearing assembly (4) and connecting each electromagnetic bearing assemblies (4) together, and thirdly a control winding coil (11) wound around each electromagnetic poles of a single electromagnetic bearing assembly (4), the winding (11) being in the opposite direction of its radially opposed electromagnetic bearing assembly (4).

Although the stabilization apparatus is implemented for radial support of the rotor (9), the apparatus can also be used for stabilization in the Z-axis (into the page of Fig 1) with electromagnets (4) on top or bottom of the rotor (9).

It may be preferable to design the apparatus for stabilisation in either one or more planes depending on the size and shape of the rotor (9).

For the purpose of this invention, the active electromagnetic assemblies (4), not connected with a common core, act in modular groups of oppositely facing groups stabilizing an arc section of the rotor (9). This topology enables the freedom to choose the desired number of electromagnets depending on the size of the machine. The modularity of the system eliminates the need to define complex maintenance procedures which are required in case of system failures. For example in case of an inter lamination fault in the actuator apparatus or conduction insulation failures, only the particular faulty active magnetic assembly is replaced and not the whole apparatus. The apparatus can be transported in parts and assembled on site. The modularity also reduces material wastage and size of the tools thus directly reducing the manufacturing costs.

Without limiting the scope of this invention, an example configuration for a stabilization apparatus could consist of eight active electromagnetic bearing assemblies (4) for a single axis which are divided into two radially opposing groups of four active electromagnetic bearing assemblies (4) each. Those modular active electromagnetic bearing assemblies (4) could then operate in radially opposed groups where an addition in the electromagnetic force on one group results in the deduction of the same force from its opposing counterpart. For this exemplary configuration, the total number of electromagnetic assemblies (4) for stabilization in the XY plane would be sixteen.

For the purpose of this invention, the active magnetic bearing apparatus can be implemented in either homopolar or heteropolar configuration. In a heteropolar configuration the electromagnetic assemblies (4) are placed such that the polarity seen by the rotor (9) is N-S-S-N-N-S-S-N and so on. However, in this configuration the rotor (9) experiences change in magnetic field polarity as it rotates which results in eddy current and hysteresis losses. The homopolar active magnetic bearing apparatus has low rotational losses because only a single polarity is seen by the rotor during rotation.

For the purpose of this invention, the active magnetic bearing apparatus should be designed so that it can handle the forces which can destabilize the motion of the rotor (9). These forces may be generated for example from the misalignment in the levitation and the attraction between the motor cores and the permanent magnets in the rotor (9). The active magnetic bearing apparatus must have enough force generating capability after overcoming the disturbance forces to keep the rotor (9) stable.

For the purpose of this invention, the force density in the air gaps has been derived from the basic model of a U shaped core (11) with two windings (10) and (11) facing a section of the rotor (9). It forms a magnetic circuit with the section of the rotor (9) it is facing in which magnetic flux flows from one coil into a first air gap, passes through the rotor (9) into a second air gap and then into the second coil. It is assumed that the reluctance of the core path is negligible when compared to the reluctance of the air gap. The electromagnetic force density in a single air gap is given by the following equation,

$$F_m = \frac{B_g^2}{2\mu_0}$$

where,

Fm = force density in newton per square meter
Bg = magnetic flux density in the air gap $\mu_0$ = magnetic permeability of free space

The electromagnetic force in the air gap between the rotor (9) and the electromagnetic assemblies (4) is varied by controlling the current in the windings (10) and (11). The controller ensures that the net electromagnetic force in the air gaps between the opposing electromagnetic assemblies (4) and the rotor (9) is zero. This is realized with the help of a cascaded control apparatus which controls the position of the rotor by controlling the current flowing through the actuator coils (10) and (11).

The cascaded controller has two controllers.

    1. Position controller (PID controller)
    2. Current controller (PI controller)

The position controller based on the difference between the desired and measured position generates a reference signal for the current controller. This signal is then compared with the measured current in the control coil. Based on the difference between reference and the measured current the current controller decides the duty cycle of the pulse width modulated (PWM) current waveform which is used to drive the gates of the active magnetic bearing power electronics inverters. The active magnetic bearing power electronics has two full H bridge inverters (IGBT based) one for each axis (X&Y). The output is the control current that is fed to the actuator coils (10) and (11) which then generates the electromagnetic force to stabilize the rotor (9). The control apparatus model is based on the non linear relationship between electromagnetic force and control current. The controller also takes into account the disturbance forces that destabilize the rotor (9) and the sensor measurement noise.

The active magnetic bearing power electronics should have enough bandwidth to vary the maximum control current. Mathematically,

$$\omega_{BW} = \frac{ln9U_{DC}}{L_{axis}I_{max}}$$

where,

$\omega_{BW}$= bandwidth of the power electronics in rad/s
$U_{DC}$= maximum dc-link voltage in volts
$L_{axis}$= inductance of control windings for a single axis (8 U-cores in Fig 1)
$I_{max}$= maximum control current

The apparatus bandwidth can be increased by increasing the dc-link voltage. But a higher dc-link voltage increases the overall cost of the apparatus because better insulation and safety measures are needed. One other solution can be the limitation of control current. It increases the apparatus bandwidth but limits the generated electromagnetic force.

Controlling the inductance of the active magnetic bearing actuator coils (10) and (11) is a good option to have sufficient power electronics bandwidth. Ideally, the apparatus should have a constant inductance around the circumference of the rotor (9). One method by which this can achieved is by mounting the active magnetic bearing cores on motor operated linear slides (12) to vary the air gap because of the inverse relationship between the airgap and inductance.

In order to cope with rotor (9) expansion and to maintain the net change in inductance in a single axis at zero the stabilization apparatus can have U-cores on the outside of the rotor (9). In case of ring expansion the gap on the inside would increase but at the same time it would decrease on the outside thus keeping the net change in inductance minimum.

## Industrial Applicability

The disclosed invention is key to the deployment of scalable electric motor or generators utilizing hubless ring shaped rotors such as flywheel energy storage devices: when the diameter and speed of the device reaches certain thresholds, especially in cases where the rotor is not located on a central shaft or hub.

## Patent Literature

The most relevant technologies and literature to the disclosed invention are listed below:

US 5300843 A (General Electric Company), 5 Apr. 1994.

US 5578880 A (General Electric Company), 26 Nov. 1996.

US 9559565 B2 (Calnetix Technologies Inc.), 31 Jan. 2017.

US 20100090556 A1, (Calnetix Technologies Inc.), 15 Apr. 2010.

US 6727617 B2 (Calnetix Technologies Inc.), 27 Apr. 2004.

US 6700258 B2 (Calnetix Technologies Inc.), 2 Mar. 2004.

US 9531236 B2 (Calnetix Technologies Inc.), 27 Dec. 2016.

US 20110101905 A1 (Calnetix Technologies Inc), 5 May 2011.

Wide air gap and large scale bearingless segment motor with six stator elements, W. Gruber, T. Nussbaumer, H. Grabner, and W. Amrhein.

Modelling of control system for an active magnetic bearing, Bronistaw TOMCZUK, Dawid WAJNERT, Jan ZIMON.

Direct Drive Wind Turbine Generator with Magnetic Bearing, G. Shrestha, H. Polinder, D.J. Bang, J.A. Ferreira.

## Claims

1. An electromagnetic actuator apparatus for rotors in motors and generators comprising:

   - an actuator target mounted on a hubless ring shaped rotor (9) having a rotational axis;
   - a multitude of modular radially opposed groups (5 to 6, 7 to 8) of electromagnetic bearing assemblies (4) distributed along the circumference of the rotor (9) at fixed distances from each other, the assemblies thereof (4) further being both oriented toward the actuator target mounted on the rotor (9), and separated from the rotor (9) by radial gaps;

   **characterized in that:**

   - the multitude of modular radially opposed groups (5 to 6, 7 to 8) of electromagnetic bearing assemblies (4), acting in radially opposed groups (5 to 6, 7 to 8) for the stabilization of the corresponding arc sections of the rotor (9), are not connected by a common core; and
   - each of the electromagnetic bearing assemblies (4) thereof comprises

     o a multitude of spaced radial electromagnetic poles facing the rotor (9) and configured to induce electromagnetic flux with the actuator target mounted on the rotor (9),
     o a bias winding coil (10) wound around each of the electromagnetic poles of a single electromagnetic bearing assembly (4) and connecting each of the electromagnetic bearing assemblies (4) together, and
     o a control winding coil (11) wound around each of the electromagnetic poles of a single electromagnetic bearing assembly (4), the winding being in the opposite direction of its radially opposed electromagnetic bearing assembly (4).

2. An apparatus according to claim 1, wherein the modular electromagnetic bearing assemblies (4) are alternatively situated inside or outside the rotor (9) or in a combination of the aforementioned configurations, so long as they are facing the rotor (9).

3. A method of electromagnetic radial support of rotors (9) in motors and generators **characterized in that** a multitude of modular electromagnetic bearing assemblies (4) not connected by a common core and acting in radially opposed groups (5 to 6, 7 to 8) for the stabilization of the corresponding arc sections of the rotor (9) are actuated through a linear movement apparatus (12) being moveable individually;

   wherein the rotor (9) is a hubless ring shaped rotor (9) having a rotational axis and the assemblies (4) are distributed along the circumference of the rotor (9) at fixed distances from each other and are both oriented toward the actuator target mounted on the rotor (9) and separated from the rotor (9) by radial gaps; and

wherein each of the electromagnetic bearing assemblies (4) thereof comprises:

- a multitude of spaced radial electromagnetic poles facing the rotor (9) and configured to induce electromagnetic flux with an actuator target mounted on the rotor (9),
- a bias winding coil (10) wound around each of the electromagnetic poles of a single electromagnetic bearing assembly (4) and connecting each of the electromagnetic bearing assemblies (4) together, and
- a control winding coil (11) wound around each of electromagnetic poles of a single electromagnetic bearing assembly (4), the winding being in the opposite direction of its radially opposed electromagnetic bearing assembly (4).

4. A method according to claim 3, wherein the modular electromagnetic bearing assemblies (4) are actuated so to maintain constant air gaps with the rotor (9).

5. A method according to claims 3 and 4, wherein the modular electromagnetic bearing assemblies (4) are actuated so to vary their inductance with the actuator target on the rotor (9).

6. A method according to claims 3 to 5, wherein the modular electromagnetic bearing assemblies (4) are actuated so to obtain different air gaps between their different groups (5, 6, 7 and 8) of radially opposed groups (5, 6, 7 and 8).

**Patentansprüche**

1. Elektromagnetische Aktuatorvorrichtung für Rotoren in Motoren und Generatoren, umfassend:

- ein Aktuatorziel, das auf einem nabenlosen ringförmigen Rotor (9) mit einer Drehachse montiert ist;
- eine Vielzahl von modularen, radial gegenüberliegenden Gruppen (5 bis 6, 7 bis 8) von elektromagnetischen Lageranordnungen (4), die entlang des Umfangs des Rotors (9) in festen Abständen voneinander verteilt sind, wobei die Anordnungen davon (4) ferner sowohl auf das auf dem Rotor (9) montierte Aktuatorziel ausgerichtet als auch durch radiale Lücken von dem Rotor (9) getrennt sind;

**dadurch gekennzeichnet, dass:**

- die Vielzahl modularer radial gegenüberliegender Gruppen (5 bis 6, 7 bis 8) der elektromagnetischer Lageranordnungen (4), die in radial gegenüberliegenden Gruppen (5 bis 6, 7 bis 8) zur Stabilisierung der entsprechenden Bogenabschnitte des Rotors (9) wirken, nicht durch einen gemeinsamen Kern verbunden sind; und
- jede der elektromagnetischen Lageranordnungen (4) davon umfasst

o eine Vielzahl von beabstandeten radialen elektromagnetischen Polen, die dem Rotor (9) zugewandt sind und so konfiguriert sind, dass sie einen elektromagnetischen Fluss induzieren, wobei das Aktuatorziel auf dem Rotor (9) montiert ist,
o eine Vorspannungsspule (10), die um jeden der elektromagnetischen Pole einer einzelnen elektromagnetischen Lageranordnung (4) gewickelt ist und jede der elektromagnetischen Lageranordnungen (4) miteinander verbindet, und
o eine Steuerwicklungsspule (11), die um jeden der elektromagnetischen Pole einer einzelnen elektromagnetischen Lageranordnung (4) gewickelt ist, wobei die Wicklung in der entgegengesetzten Richtung ihrer radial gegenüberliegenden elektromagnetischen Lageranordnung (4) verläuft.

2. Vorrichtung nach Anspruch 1, wobei die modularen elektromagnetischen Lageranordnungen (4) wahlweise innerhalb oder außerhalb des Rotors (9) oder in einer Kombination der vorgenannten Konfigurationen angeordnet sind, solange sie dem Rotor (9) zugewandt sind.

3. Verfahren zur elektromagnetischen radialen Abstützzung von Rotoren (9) in Motoren und Generatoren, **dadurch gekennzeichnet, dass** eine Vielzahl von modularen elektromagnetischen Lageranordnungen (4), die nicht durch einen gemeinsamen Kern verbunden sind und in radial gegenüberliegenden Gruppen (5 bis 6, 7 bis 8) zur Stabilisierung der entsprechenden Bogenabschnitte des Rotors (9) wirken, durch eine einzeln bewegliche lineare Bewegungsvorrichtung (12) betätigt werden;

wobei der Rotor (9) ein nabenloser ringförmiger Rotor (9) mit einer Drehachse ist und die Anordnungen (4) entlang des Umfangs des Rotors (9) in festen Abständen voneinander verteilt sind und beide auf das auf dem Rotor (9) montierte Aktuatorziel ausgerichtet und durch radiale Lücken von dem Rotor (9) getrennt sind; und
wobei jede der elektromagnetischen Lageranordnungen (4) davon umfasst:

- eine Vielzahl von beabstandeten radialen elektromagnetischen Polen, die dem Rotor (9) zugewandt sind und so konfiguriert sind, dass sie einen elektromagnetischen Fluss induzieren, wobei das Aktuatorziel auf dem Rotor (9) montiert ist,

- eine Vorspannungsspule (10), die um jeden der elektromagnetischen Pole einer einzelnen elektromagnetischen Lageranordnung (4) gewickelt ist und jede der elektromagnetischen Lageranordnungen (4) miteinander verbindet, und

- eine Steuerwicklungsspule (11), die um jeden der elektromagnetischen Pole einer einzelnen elektromagnetischen Lageranordnung (4) gewickelt ist, wobei die Wicklung in der entgegengesetzten Richtung ihrer radial gegenüberliegenden elektromagnetischen Lageranordnung (4) verläuft.

4. Verfahren nach Anspruch 3, wobei die modularen elektromagnetischen Lageranordnungen (4) so betätigt werden, dass konstante Luftspalte mit dem Rotor (9) aufrechterhalten werden.

5. Verfahren nach den Ansprüchen 3 und 4, wobei die modularen elektromagnetischen Lageranordnungen (4) so betätigt werden, dass ihre Induktivität mit dem Aktuatorziel auf dem Rotor (9) variiert.

6. Verfahren nach den Ansprüchen 3 bis 5, wobei die modularen elektromagnetischen Lageranordnungen (4) so betätigt werden, dass sie unterschiedliche Luftspalte zwischen ihren verschiedenen Gruppen (5, 6, 7 und 8) von radial gegenüberliegenden Gruppen (5, 6, 7 und 8) erhalten.

**Revendications**

1. Appareil actionneur électromagnétique pour des rotors dans des moteurs et générateurs comprenant :

- une cible d'actionneur montée sur un rotor de forme annulaire sans moyeu (9) ayant un axe de rotation ;
- une multitude de groupes modulaires opposés radialement (5 à 6, 7 à 8) d'ensembles paliers électromagnétiques (4) répartis le long de la circonférence du rotor (9) à des distances fixes les uns des autres, les ensembles de ceux-ci (4) étant à la fois orientés vers la cible d'actionneur montée sur le rotor (9) et séparés du rotor (9) par des espaces radiaux ;

**caractérisé en ce que** :

- la multitude de groupes modulaires opposés radialement (5 à 6, 7 à 8) d'ensembles paliers électromagnétiques (4), agissant dans des groupes opposés radialement (5 à 6, 7 à 8) pour la stabilisation des sections d'arc correspondantes du rotor (9), ne sont pas reliés par un noyau commun ; et

- chacun des ensembles paliers électromagnétiques (4) de ceux-ci comprend

o une multitude de pôles électromagnétiques radiaux espacés faisant face au rotor (9) et configurés pour induire un flux électromagnétique avec la cible d'actionneur montée sur le rotor (9),

o une bobine d'enroulement de polarisation (10) enroulée autour de chacun des pôles électromagnétiques d'un ensemble palier électromagnétique individuel (4) et reliant chacun des ensembles paliers électromagnétiques (4) entre eux, et

o une bobine d'enroulement de commande (11) enroulée autour de chacun des pôles électromagnétiques d'un ensemble palier électromagnétique individuel (4), l'enroulement étant dans la direction opposée de son ensemble palier électromagnétique opposé radialement (4).

2. Appareil selon la revendication 1, dans lequel les ensembles paliers électromagnétiques modulaires (4) sont situés en alternance à l'intérieur ou à l'extérieur du rotor (9) ou dans une combinaison des configurations susmentionnées, tant qu'ils font face au rotor (9).

3. Procédé de support radial électromagnétique de rotors (9) dans des moteurs et des générateurs **caractérisé en ce qu'**une multitude d'ensembles paliers électromagnétiques modulaires (4) non reliés par un noyau commun et agissant dans des groupes opposés radialement (5 à 6, 7 à 8) pour la stabilisation des sections d'arc correspondantes du rotor (9) sont actionnés par le biais d'un appareil à mouvement linéaire (12) mobile individuellement ;

dans lequel le rotor (9) est un rotor de forme annulaire sans moyeu (9) ayant un axe de rotation et les ensembles (4) sont répartis le long de la circonférence du rotor (9) à des distances fixes les uns des autres et sont à la fois orientés vers la cible d'actionneur montée sur le rotor (9) et séparés du rotor (9) par des espaces radiaux ; et

dans lequel chacun des ensembles paliers électromagnétiques (4) de ceux-ci comprend :

- une multitude de pôles électromagnétiques radiaux espacés faisant face au rotor (9) et configurés pour induire un flux électromagnétique avec une cible d'actionneur montée sur le rotor (9),

- une bobine d'enroulement de polarisation (10) enroulée autour de chacun des pôles électromagnétiques d'un ensemble palier électromagnétique individuel (4) et reliant chacun des ensembles paliers électromagnétiques (4) entre eux, et

- une bobine d'enroulement de commande (11) enroulée autour de chacun des pôles électromagnétiques d'un ensemble palier électromagnétique individuel (4), l'enroulement étant dans la direction opposée de son ensemble palier électromagnétique opposé radialement (4).

4. Procédé selon la revendication 3, dans lequel les ensembles paliers électromagnétiques modulaires (4) sont actionnés de façon à maintenir des entrefers constants avec le rotor (9).

5. Procédé selon les revendications 3 et 4, dans lequel les ensembles paliers électromagnétiques modulaires (4) sont actionnés de façon à faire varier leur inductance avec la cible d'actionneur sur le rotor (9).

6. Procédé selon les revendications 3 à 5, dans lequel les ensembles paliers électromagnétiques modulaires (4) sont actionnés de façon à obtenir différents entrefers entre leurs différents groupes (5, 6, 7 et 8) de groupes opposés radialement (5, 6, 7 et 8).

Fig. 1

Fig. 2

Y

X

12

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030192449 A1
- WO 9707341 A1
- US 9787156 B1
- US 5300843 A
- US 5578880 A
- US 9559565 B2
- US 20100090556 A1
- US 6727617 B2
- US 6700258 B2
- US 9531236 B2
- US 20110101905 A1

**Non-patent literature cited in the description**

- **W. GRUBER ; T. NUSSBAUMER ; H. GRABNER ; W. AMRHEIN.** *Wide air gap and large scale bearingless segment motor with six stator elements*
- **BRONISTAW TOMCZUK ; DAWID WAJNERT ; JAN ZIMON.** *Modelling of control system for an active magnetic bearing*
- **G. SHRESTHA ; H. POLINDER ; D.J. BANG ; J.A. FERREIRA.** *Direct Drive Wind Turbine Generator with Magnetic Bearing*